# EUROPEAN PATENT SPECIFICATION

(11) **EP 2 653 271 B1**
(45) Date of publication and mention of the grant of the patent: **31.12.2014**
(21) Application number: 13159581.1
(22) Date of filing: 15.03.2013
(51) Int. Cl.: B25F 5/02

(54) **Rechargeable electric power tool**
Wiederaufladbares elektrisches Werkzeug
Outil électrique rechargeable

(30) Priority: 20.04.2012 JP 2012096723
(43) Date of publication of application: 23.10.2013
(73) Proprietor: Makita Corporation, Anjo-shi, Aichi 446-8502 (JP)
(72) Inventor: Hayashi, Masanori, Anjo-shi,, Aichi 446-8502 (JP); Watanabe, Masahiro, Anjo-shi,, Aichi 446-8502 (JP); Hayashi, Katsuna, Anjo-shi,, Aichi 446-8502 (JP); Omura, Motohiro, Anjo-shi,, Aichi 446-8502 (JP); Kani, Toshiyuki, Anjo-shi,, Aichi 446-8502 (JP)
(74) Representative: Kramer Barske Schmidtchen Patentanwälte PartG mbB

(56) References cited:
- WO-A1-03/061913
- WO-A1-2009/135338
- DE-A1- 4 027 135
- DE-A1-102008 001 753
- GB-A- 2 416 317
- US-A1- 2005 200 087
- US-B2- 7 256 520
- US-B2- 7 274 866

## Description

### BACKGROUND OF THE INVENTION

### TECHNICAL FIELD

The present invention relates to a rechargeable electric power tool including a battery pack that is detachably provided on a housing accommodating a motor and that supplies electric power to the motor, and a tool that is driven by the motor.

### BACKGROUND ART

WO 03/061913 A1 discloses a trigger handle for the operation of a power tool.

Generally, in a rechargeable electric power tool according to the preamble of independent claim 1 or 12, it is possible to supply electric power to a motor in a state where a battery pack is loaded on a housing or the like. The rechargeable electric power tool is equipped with a lock-off mechanism. The lock-off mechanism prevents a switch from being erroneously turned on at the time of carrying the rechargeable electric power tool. The lock-off mechanism also prevents electric power from being erroneously supplied to the motor at the time of loading the battery pack on the housing or the like so as to keep a lock-off state in which the motor is not allowed to be driven. For example, General Catalog presented by Makita Corporation, January, 2012, p57, (searched on April 16, 2012), <URL:http://www.makita.co.jp/product/ecatalog/sougou/index.html#56> describes a rechargeable jigsaw in which a battery pack is detachably mounted on a housing accommodating a motor and supplies electric power to the motor, a rod protrudes downward at the front of the housing and is reciprocated by the motor, and a workpiece is cut with a cutting blade coupled to the lower end of the rod. In the rechargeable jigsaw described in General Catalog presented by Makita Corporation, January, 2012, p57, (searched on April 16, 2012), <URL:http://www.makita.co.jp/product/ecatalog/sougou/index.html#56>, a switch having a trigger that is able to switch between a state where electric power is supplied from the battery pack to the motor and a state where electric power is not supplied from the battery pack to the motor is accommodated in a handle that extends between the front portion and rear portion of the housing. In this rechargeable jigsaw, when an operator depresses the trigger into the handle while gripping the handle, the switch turns on, and the motor is driven. Accordingly, the cutting blade is reciprocated, and is able to cut a workpiece.

However, in rechargeable electric power tools, typically, the above-described rechargeable jigsaw, during work for cutting a workpiece, it is required to continuously supply electric power to the motor in order to reciprocate the cutting blade that is an example of a tool. Therefore, during work for cutting a workpiece, an operator has been required to continue depressing the trigger of the switch, accommodated in the grippable handle, into the handle. In such a case, depressing the trigger into the handle becomes a burden on the operator and it is not convenient for the operator to conduct work for machining a workpiece with a tool.

### SUMMARY OF THE INVENTION

The present invention according to independent claims 1 and 12 is proposed in view of the above situation, and it is an object of the invention to provide a rechargeable electric power tool that is able to maintain a lock-off state and, in addition, to make it easy to conduct work for machining a workpiece by reducing a burden on an operator.

A first aspect of the present invention provides a rechargeable electric power tool. The rechargeable electric power tool includes a housing, a motor that is accommodated in the housing, a battery pack that is detachably provided on the housing and that supplies electric power to the motor, a tool that is driven by the motor, a standby switch, and a lock-on switch. The standby switch is arranged at the housing and is able to set the rechargeable electric power tool to a standby state where the rechargeable electric power tool waits for the motor to be driven. The lock-on switch is arranged at the housing, and is able to shift the rechargeable electric power tool from the standby state to a state where the motor is driven so as to keep the state where the motor is driven.

According to a second aspect of the present invention, in the rechargeable electric power tool according to the first aspect, a gripping region is formed on the housing, and the standby switch and the lock-on switch are arranged in the gripping region. It should be noted that the gripping region includes not only a region that an operator directly grips but also a region within a range in which a finger of the operator reaches.

According to a third aspect of the present invention, the rechargeable electric power tool according to the first aspect further includes an informing unit that informs that the rechargeable electric power tool is set in the standby state by the standby switch.

According to a fourth aspect of the present invention, the rechargeable electric power tool according to the first aspect further includes a control unit that controls the rechargeable electric power tool such that the rechargeable electric power tool is released from the standby state after a predetermined period of time has elapsed from when the rechargeable electric power tool is set to the standby state by the standby switch.

With the rechargeable electric power tool according to the first aspect of the present invention, before a workpiece is machined with the use of the tool, it is possible to keep a lock-off state until the standby switch is operated. Thus, it is possible to obtain the function equivalent to a lock-off mechanism by providing the standby switch. In addition, after the rechargeable electric power tool is set to the standby state by operating the standby switch, it is possible to shift from the standby state to the state where the motor is kept driven by operating the lock-on switch. Thus, it is not required to continue operating the switch in order to keep the state where the motor is driven. Therefore, it is possible to reduce a burden on the operator for keeping the state where the motor is driven. Accordingly, it becomes easy to conduct work for machining a workpiece with the tool.

According to the second aspect of the invention, the operator is allowed to operate the standby switch and the lock-on switch while the operator is gripping the gripping region. Thus, it is possible to improve the operability of the standby switch and the lock-on switch.

According to the third aspect of the invention, it is possible to easily make the operator recognize through the informing unit that the rechargeable electric power tool is set in the standby state.

According to the fourth aspect of the invention, even when the rechargeable electric power tool is once set to the standby state by the standby switch, it is possible to release the rechargeable electric power tool from the standby state by the control unit after a lapse of the predetermined period of time from when the rechargeable electric power tool is set to the standby state. Thus, it is possible to prevent the rechargeable electric power tool from being continuously kept in the standby state.

### BRIEF DESCRIPTION OF THE DRAWINGS

FIG. 1 is an overall perspective view of a rechargeable jigsaw according to a first embodiment of the present invention.
FIG. 2 is a left side view of the rechargeable jigsaw.
FIG. 3 is a right side view of the rechargeable jigsaw.
FIG. 4 is an overall perspective view of a rechargeable jigsaw according to a second embodiment of the present invention.

### DETAILED DESCRIPTION OF THE EMBODIMENTS

### <First Embodiment>

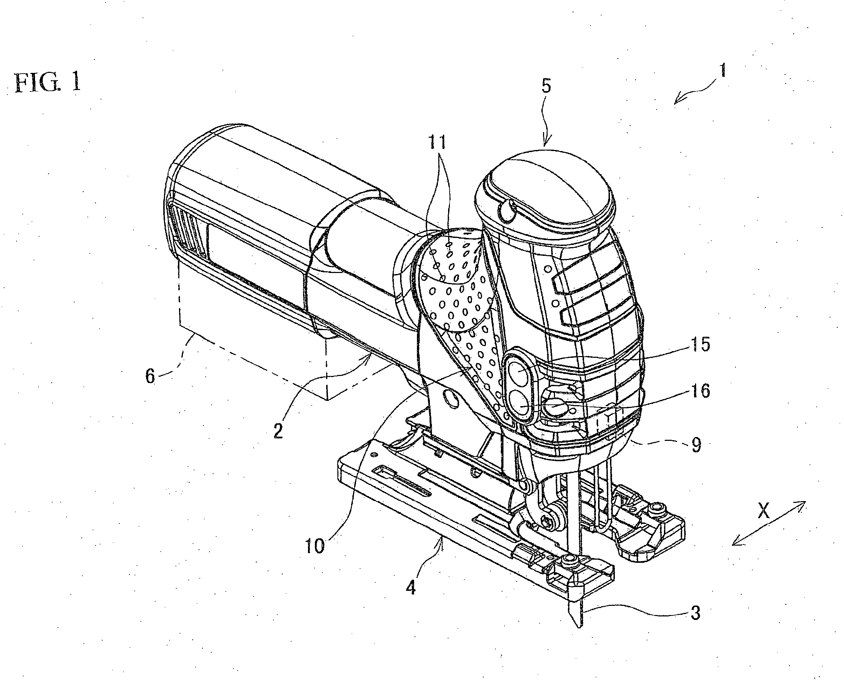

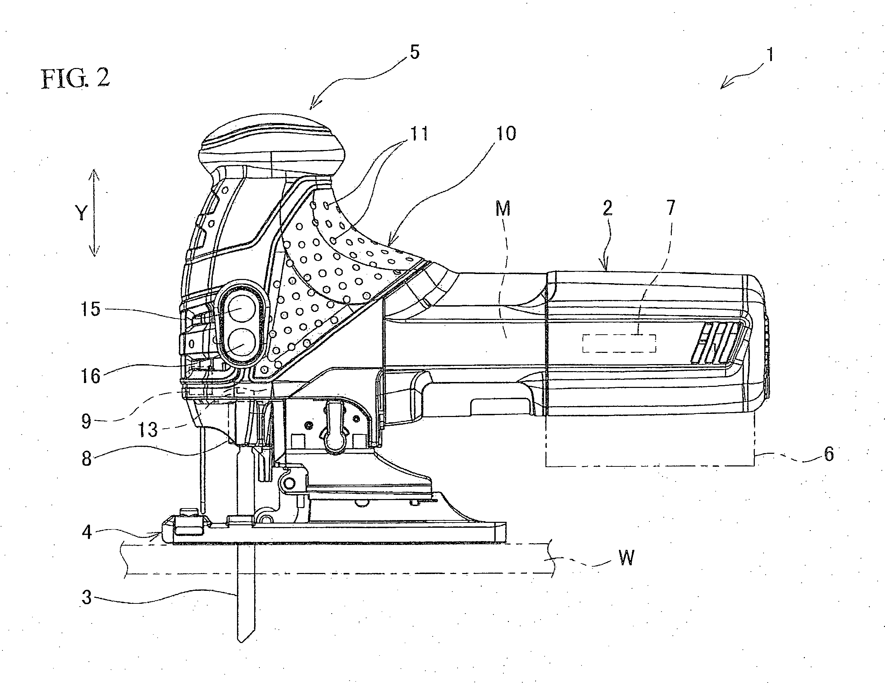

A first embodiment of the invention will be described with reference to FIG. 1 to FIG. 3. As shown in the drawings, a rechargeable jigsaw 1 includes a housing 2, a blade 3 and a base 4. The rechargeable jigsaw 1 is an example of a rechargeable electric power tool according to the present invention. As shown in FIG. 2, the housing 2 is formed into an L shape in side view such that a front portion 5 is protruded upward beyond a rear portion (right side in FIG. 2). A motor M is accommodated in the center portion of the housing 2. A battery pack 6 is detachably loaded on the lower surface of the rear portion (right side in FIG. 2) of the housing 2. The battery pack 6 supplies electric power to the motor M when either one of lock-on switches (described later) 16 (see FIG. 2) is turned on. In addition, a control device 7 is accommodated in the housing 2. Lead wires (not shown) are connected to the battery pack 6. Electric power is supplied to the control device 7 through the lead wires via either one of standby switches (described later) 15 (see FIG. 2).

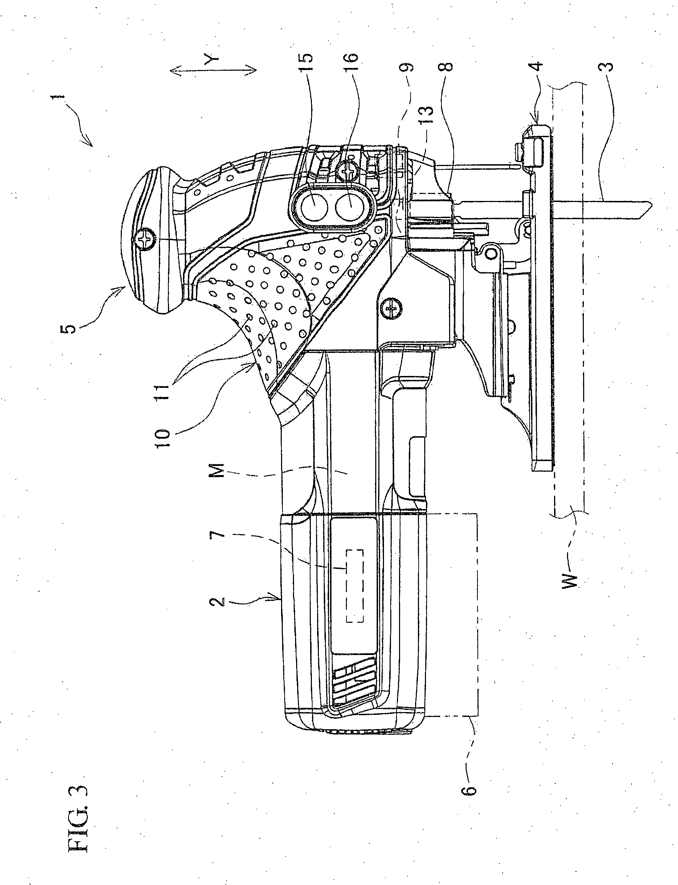

On the other hand, a reciprocating mechanism is accommodated in the front portion 5. Rotation of the motor M is transmitted to the reciprocating mechanism via a gear. Furthermore, a rod 13 is supported inside the front portion 5 so as to be movable up and down. The reciprocating mechanism converts the rotation of the motor M to the reciprocating movement of the rod 13 in an up and down direction Y (see FIG. 2 and FIG. 3). The lower end portion of the rod 13 is located outside the housing 2. A blade mounting portion 8 (see FIG. 2 and FIG. 3) is provided at the lower end portion of the rod 13. In addition, a light emitting diode (LED) 9 is held at the front lower side in the front portion 5. In a state where the LED 9 is held in the front portion 5, a light emitting portion of the LED 9 is directed downward through an opening at the lower surface of the front portion 5.

As shown in FIG. 1 to FIG. 3, the blade 3 has a linear shape, and is fixed to the blade mounting portion 8. It should be noted that the blade 3 is an example of a tool according to the present invention. The base 4 is fixed to the lower surface of the front portion 5. The base 4 is used to be brought into contact with the upper surface of a workpiece W (see FIG. 2 and FIG. 3).

As shown in FIG. 2 and FIG. 3, the front portion 5 is located in front of the motor M, and is gripped by an operator when the rechargeable jigsaw 1 is operated. In the following description, the left side surface of the front portion 5 indicates the side surface of the front portion 5 at the far side in FIG. 1, and the right side surface of the front portion 5 indicates the side surface of the front portion 5 at the near side in FIG. 1.

As shown in FIG. 1 to FIG. 3, a non-slip portion 10 is formed on the outer surface of the front portion 5 from the back surface of the front portion 5 toward both right and left side surfaces of the front portion 5. A plurality of dents 11 are provided for the non-slip portion 10. This improves the gripping performance of the front portion 5 and allows the operator to stably grip the front portion 5.

Furthermore, as shown in FIG. 2 and FIG. 3, the standby switch 15 and the lock-on switch 16 are arranged one above the other along the same line in the extension line of the rod 13 on each of both right and left sides of the front portion 5. Here, each standby switch 15 is arranged above and each lock-on switch 16 is arranged below. In addition, the standby switch 15 on the left side surface of the front portion 5 and the standby switch 15 on the right side surface of the front portion 5 are arranged at symmetrical positions in a lateral direction X (see FIG. 1) of the housing 2. Furthermore, the lock-on switch 16 on the left side surface and the lock-on switch 16 on the right side surface are arranged at symmetrical positions in the lateral direction X. With regard to the standby switch 15 and the lock-on switch 16 arranged on the right side surface of the front portion 5, the operator can conduct pressing operation with the index finger of the right hand while gripping the non-slip portion 10 with the right hand. With regard to the standby switch 15 and the lock-on switch 16 arranged on the left side surface of the front portion 5, the operator can conduct pressing operation with the index finger of the left hand while gripping the non-slip portion 10 with the left hand. It should be noted that a region from the back surface of the front portion 5 toward both right and left side surfaces of the front portion 5 is an example of a gripping region according to the present invention.

Each standby switch 15 is formed of a press switch, and has a pressing piece that is movable by a predetermined stroke through pressing operation. By pressing the pressing piece of the standby switch 15 once, the standby switch 15 turns on. As the standby switch 15 turns on, the rechargeable jigsaw 1 shifts from a stop state to a standby state where the rechargeable jigsaw 1 waits for the motor M to be driven. In the standby state, electric power is supplied from the battery pack 6 to the control device 7. At this time, the control device 7 executes control for causing the LED 9 to emit light.

On the other hand, each lock-on switch 16 is also formed of a press switch as in the case of each standby switch 15. By pressing the pressing piece of the lock-on switch 16 once, the lock-on switch 16 turns on. By turning on the lock-on switch 16 when the standby switch 15 is in an on state, a state where electric power is supplied from the battery pack 6 to the motor M is kept. As a result, the rechargeable jigsaw 1 shifts from the standby state to a state where the motor M is driven and is kept driven.

Next, the operation of the rechargeable jigsaw 1 according to the present embodiment will be described. Here, description will be made on an example in which the operator operates the rechargeable jigsaw 1 while gripping the non-slip portion 10 with the right hand. The operator brings the base 4 into contact with the upper surface of the workpiece W, and presses the pressing piece of the standby switch 15 on the right side surface of the front portion 5 with the index finger of the right hand once while gripping the non-slip portion 10. Then, the rechargeable jigsaw 1 enters a standby state, and the control device 7 causes the LED 9 to emit light. Light emitted from the LED 9 is radiated onto the workpiece W via the opening of the lower surface of the front portion 5. Thus, the operator is able to recognize that the rechargeable jigsaw 1 is set in the standby state by visually checking whether light is radiated onto the workpiece W. It should be noted that the LED 9 is an example of an informing unit according to the present invention, and also serves as an illuminator that radiates light to a position at which the workpiece W is cut with the blade 3, thereby improving the visualization of the position.

Subsequently, the operator presses the pressing piece of the lock-on switch 16 on the right side surface with the index finger of the right hand once while gripping the non-slip portion 10. By so doing, a state where electric power is supplied from the battery pack 6 to the motor M is kept, and, as a result, the rechargeable jigsaw 1 shifts from the standby state to a state where the motor M is kept driven. As the reciprocating mechanism operates accordingly, the blade 3 is reciprocated in the up and down direction Y together with the rod 13, and cuts the workpiece W. In the present embodiment, at the time of work for cutting the workpiece, the pressing piece of the lock-on switch 16 just needs to be pressed once, and it is not required to continue pressing the switch in order to keep the state where the motor M is driven.

After cutting work has been completed, when the operator presses the pressing piece of either one of the standby switch 15 and the lock-on switch 16 once, the control device 7 executes control for stopping supply of electric power from the battery pack 6 to the control device 7 and supply of electric power to the motor M, and returns the rechargeable jigsaw 1 to the stop state. When the control device 7 detects, with a timer connected to the control device 7, that a predetermined period of time has elapsed from when the rechargeable jigsaw 1 is set to the standby state without pressing operation of the lock-on switch 16 and a set period of time of the timer becomes zero, the control device 7 executes control for turning off the standby switch 15. Accordingly, the rechargeable jigsaw 1 is released from the standby state and is returned to the stop state. It should be noted that the control device 7 is an example of a control unit according to the present invention.

In addition, when the operator operates the rechargeable jigsaw 1 while gripping the non-slip portion 10 with the left hand as well, the operator can press the standby switch 15 or the lock-on switch 16 on the left side surface of the front portion 5 with the index finger of the left hand while gripping the non-slip portion 10. In addition, when the operator operates the rechargeable jigsaw 1 while gripping the non-slip portion 10 with the left hand as well, at the time of work for cutting the workpiece, the pressing piece of the lock-on switch 16 just needs to be pressed with the index finger of the left hand once. It is, therefore, not required to continue pressing the switch in order to keep the state where the motor M is driven. Furthermore, after cutting work has been completed, when the operator presses the pressing piece of either one of the standby switch 15 and the lock-on switch 16 on the left side surface once, the control device 7 returns the rechargeable jigsaw 1 to the stop state.

It should be noted that the control device 7 releases the standby state of the rechargeable jigsaw 1 when a predetermined period of time has elapsed from when the rechargeable jigsaw 1 is set to the standby state by operating the standby switch 15 on the left side surface, without pressing operation of the lock-on switch 16 on the left side surface.

Moreover, in the present embodiment, the standby switch 15 on the left side surface of the front portion 5 and the standby switch 15 on the right side surface of the front portion 5 are arranged at symmetrical positions in the lateral direction X of the housing 2, and the lock-on switch 16 on the left side surface and the lock-on switch 16 on the right side surface are arranged at symmetrical positions in the lateral direction X. Therefore, when the operator grips the non-slip portion 10 with either one of right and left hands as well, the operator can operate the switches 15 and 16 on the left side surface and the switches 15 and 16 on the right side surface in a similar way.

### <Advantageous Effects of First Embodiment>

With the rechargeable jigsaw 1 according to the present embodiment, before the workpiece W is cut with the blade 3, the lock-off state is kept until either one of the standby switches 15 is pressed. Thus, it is possible to provide a function equivalent to a lock-off mechanism by providing each standby switch 15. In addition, after the rechargeable jigsaw 1 is set to the standby state by pressing the pressing piece of either one of the standby switches 15 once, it is possible to shift from the standby state to the state where the motor M is kept driven by pressing the pressing piece of either one of the lock-on switches 16 once. Thus, it is not required to continue pressing the switch in order to keep the motor M driven, so it is possible to reduce a burden on the operator for keeping the motor M driven. Accordingly, it becomes easy to conduct work for cutting the workpiece W with the blade 3.

In addition, the operator can press either one of the standby switches 15 and either one of the lock-on switches 16 while gripping the non-slip portion 10 of the housing 2. Thus, it is possible to improve the operability of the standby switches 15 and the lock-on switches 16.

Furthermore, the LED 9 is controlled by the control device 7 so as to emit light in the standby state, so the operator is able to easily recognize that the rechargeable jigsaw 1 is set in the standby state by the light emitted from the LED 9.

In addition, the control device 7 executes control for releasing the standby state after a lapse of a predetermined period of time from when the rechargeable jigsaw 1 is set to the standby state. Therefore, even when the rechargeable jigsaw 1 is once set to the standby state with the standby switch 15, the control device 7 is able to release the standby state after a lapse of the predetermined period of time from when the rechargeable jigsaw 1 is set to the standby state. Thus, it is possible to prevent the rechargeable jigsaw 1 from being kept in the standby state.

### <Second Embodiment>

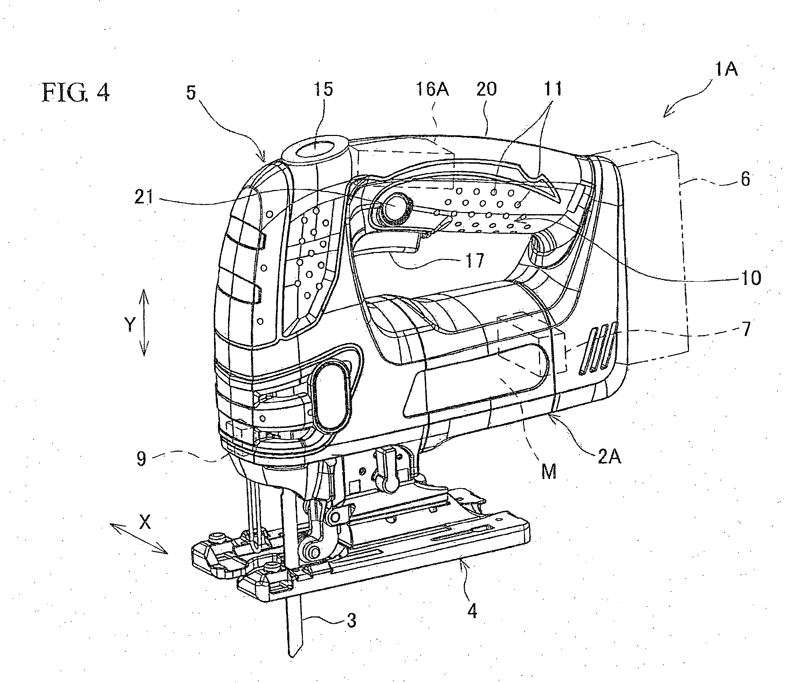

A second embodiment of the invention will be described with reference to FIG. 4. Like reference numerals denote the same components to those of the first embodiment, and the description thereof is omitted. As shown in FIG. 4, the housing 2A is formed into an L shape in side view such that a front portion 5 is protruded upward beyond a rear portion (right side in FIG. 4). A rechargeable jigsaw 1A according to the present embodiment, as shown in FIG. 4, includes a handle 20 that extends from the rear end (right side in FIG. 4) of the housing 2A upward, inclines gradually upward toward the front portion 5, and is integrally connected to the back surface of the front portion 5. The handle 20 is gripped by the operator when the operator operates the rechargeable jigsaw 1A. The battery pack 6 is detachable by sliding the battery pack 6 in an up and down direction with respect to the rear end surface of the housing 2A and the rear end surface of the handle 20.

As shown in FIG. 4, a standby switch 15 is arranged on the upper surface of the front portion 5. Furthermore, the handle 20 accommodates a switch 16A that has a trigger 17 that is depressible into the handle 20 from the lower side. In addition, lock-on buttons 21 are arranged at the handle 20 so as to be depressible into the handle 20 from the right and left sides of the handle 20. Each lock-on button 21 has a cylindrical columnar shape. In the present embodiment, after the trigger 17 is depressed into the handle 20 to be moved to a depressed position at which the switch 16A is turned on, when either one of the lock-on buttons 21 is depressed into the handle 20, it is possible to keep a state where the trigger 17 is depressed in the handle 20 (lock-on state). The non-slip portion 10 is formed on the outer surface of the handle 20 in the longitudinal direction (horizontal direction in FIG. 4) of the handle 20 over a predetermined length.

Next, the operation of the rechargeable jigsaw 1A according to the present embodiment will be described. In the rechargeable jigsaw 1A, the standby switch 15 is arranged on the upper surface of the front portion 5 within the range in which the thumb of the right hand reaches while the operator is gripping the non-slip portion 10 of the handle 20 with the right hand. When the operator presses the pressing piece of the standby switch 15 with the thumb of the right hand once while gripping the non-slip portion 10 of the handle 20 with the right hand, the rechargeable jigsaw 1A enters the standby state, and the LED 9 emits light. In this state, the operator depresses the trigger 17 into the handle 20 with the index finger of the right hand while gripping the non-slip portion 10, and then depresses the lock-on button 21 into the handle 20 with the left hand while the trigger 17 is placed at the depressed position. As a result, the lock-on state is kept. Even when the index finger is released from the trigger 17 at this time, the switch 16A is kept in an on state, and it is possible to keep the motor M driven as in the case of the first embodiment. It should be noted that the handle 20, and a region of the upper surface of the front portion 5 in which the standby switch 15 is arranged are an example of a gripping region according to the present invention. In addition, the switch 16A having the trigger 17 and the lock-on buttons 21 are an example of a lock-on switch according to the present invention.

On the other hand, when the operator operates the rechargeable jigsaw 1A while gripping the non-slip portion 10 with the left hand as well, the operator can press the pressing piece of the standby switch 15 with the thumb of the left hand. In addition to this, the operator can depress the trigger 17 into the handle 20 with the index finger of the left hand while gripping the non-slip portion 10 with the left hand, and can depress the lock-on button 21 into the handle 20 with the right hand while the trigger 17 is placed at the depressed position.

Furthermore, in the present embodiment, when the battery pack 6 is removed from the rear end surface of the housing 2A and the rear end surface of the handle 20, the standby switch 15 turns off. Thus, when the battery pack 6 is once removed from both rear end surfaces and then loaded onto the rear end surfaces again, the motor M is not erroneously driven even if the lock-on state is kept.

### <Advantageous Effects of Second Embodiment>

With the jigsaw 1A according to the present embodiment, after the jigsaw 1A is set to the standby state by pressing the pressing piece of the standby switch 15 once, it is possible to keep a state where the trigger 17 is depressed into the handle 20 at the depressed position at which the switch 16A is in an on state, so it is possible to shift the jigsaw 1A from the standby state to the state where the motor M is kept driven. Thus, it is not required to continue depressing the trigger 17 into the handle 20 in order to keep the motor M driven, so it is possible to reduce a burden on the operator for keeping the motor M driven. Accordingly, it becomes easy to conduct work for cutting the workpiece W with the blade 3.

The present invention is not limited to the above-described embodiments. The present invention may be implemented by modifying part of the components of the above-described embodiments as needed without departing from the scope of the invention. For example, different from the above-described first embodiment, the standby switch 15 and the lock-on switch 16 may be arranged one above the other on each of both right and left side surfaces of the front portion 5 at a position forward of the extension line of the rod 13. In addition, different from the first embodiment, the standby switch 15 and the lock-on switch 16 may be arranged side by side in the longitudinal direction of the front portion 5 on each of both right and left side surfaces of the front portion 5.

Furthermore, different from the first embodiment, the standby switch 15 and the lock-on switch 16 may be arranged one above the other or side by side in the longitudinal direction of the front portion 5 on either one of the right side surface and left side surface of the front portion 5. In this case, the non-slip portion 10 may be formed in either one of the region from the left side surface of the front portion 5 to the back surface of the front portion 5 and the region from the right side surface of the front portion 5 to the back surface of the front portion 5. It should be noted that the either one of the regions is an example of a gripping region according to the present invention. In addition, different from the above-described second embodiment, instead of arranging the standby switch 15 on the upper surface of the front portion 5 or providing the switch 16A having the trigger 17 and the lock-on buttons 21 at the handle 20, as in the case of the first embodiment, the standby switch 15 and the lock-on switch 16 may be arranged one above the other on at least one of the right side surface and left side surface of the front portion 5. In addition, the standby switch 15 and the lock-on switch 16 may be arranged side by side in the longitudinal direction of the front portion 5 on the either one of the right side surface and left side surface of the front portion 5.

Furthermore, in the above-described first and second embodiments, the description is made on the example in which the present invention is applied to the rechargeable jigsaw, however, it is not limited to this configuration. The present invention may be applied to a rechargeable electric power tool, such as a rechargeable reciprocating saw and a rechargeable hammer drill.

## Claims

1. A rechargeable electric power tool (1) comprising:
a housing (2);
a motor (M) that is accommodated in the housing (2) and adapted to drive a tool (3); and
a battery pack (6) that is detachably provided on the housing (2) and that is adapted to supply electric power to the motor (M);
**characterized in that** the rechargeable electric power tool (1) further comprises
a standby switch (15) that is arranged at the housing (2) and that is able to set the rechargeable electric power tool (1) to a standby state where the rechargeable electric power tool (1) waits for the motor (M) to be driven; and
a lock-on switch (16) that is arranged at the housing (2) and that is able to shift the rechargeable electric power tool (1) from the standby state to a state where the motor (M) is driven so as to keep the state where the motor (M) is driven.

2. The rechargeable electric power tool (1) according to claim 1, wherein a gripping region is formed on the housing (2), and the standby switch (15) and the lock-on switch (16) are arranged in the gripping region.

3. The rechargeable electric power tool (1) according to claim 2, wherein a gripping region is formed on each of both right and left side surfaces at a front portion (5) of the housing (2), and the standby switch (15) and the lock-on switch (16) are arranged in each of the gripping regions on both side surfaces.

4. The rechargeable electric power tool (1) according to claim 3, further comprising:
a rod (13) that protrudes downward from the front portion (5) of the housing (2) and that is adapted to be reciprocated by the motor (M), wherein the tool is a cutting blade (3) that is coupled to a lower end of the rod (13) and that is used to cut a workpiece (W), wherein
the standby switch (15) and the lock-on switch (16) are arranged one above the other in a direction (Y) along an extension line of the rod (13) in each of the gripping regions on both side surfaces.

5. The rechargeable electric power tool (1) according to claim 4, wherein each standby switch (15) is arranged above in the direction (Y) along the extension line of the rod (13), and each lock-on switch (16) is arranged below in the direction (Y) along the extension line.

6. The rechargeable electric power tool (1) according to claim 4 or 5, wherein the standby switches (15) are respectively arranged in the gripping regions on both side surfaces at symmetrical positions in a lateral direction of the housing (2), and the lock-on switches (16) are respectively arranged in the gripping regions on both side surfaces at the symmetrical positions.

7. The rechargeable electric power tool (1) according to any one of claims 1 to 6, further comprising:
an informing unit (9) that is adapted to inform that the rechargeable electric power tool (1) is set in the standby state by the standby switch (15).

8. The rechargeable electric power tool (1) according to claim 7, further comprising:
a rod (13) that protrudes downward from a front portion (5) of the housing (2) and that is adapted to be reciprocated by the motor (M), wherein the tool is a cutting blade (3) that is coupled to a lower end of the rod (13) and that is used to cut a workpiece (W); and
a base (4) that is fixed to a lower surface of the front portion (5) and that is adapted to be brought into contact with an upper surface of the workpiece (W), wherein
the informing unit is a light emitting diode (9) that is held inside the front portion (5) of the housing (2) and of which a light emitting portion is directed through an opening at the lower surface toward the workpiece (W), which is brought into contact with the base (4).

9. The rechargeable electric power tool (1) according to claim 8, wherein the light emitting portion is directed through the opening toward a cutting position of the workpiece (W) with the use of the cutting blade (3).

10. The rechargeable electric power tool (1) according to any one of claims 1 to 9, further comprising:
a control unit (7) that is adapted to control the rechargeable electric power tool (1) such that the rechargeable electric power tool (1) is released from the standby state after a predetermined period of time has elapsed from when the rechargeable electric power tool (1) is set to the standby state by the standby switch (15).

11. The rechargeable electric power tool (1) according to claim 10, further comprising:
a timer that is connected to the control unit (7) and that is adapted to set the predetermined period of time, wherein
the control unit (7) releases the rechargeable electric power tool (1) from the standby state when the control unit (7) has detected that the predetermined period of time set by the timer has elapsed.

12. A rechargeable electric power tool (1A) comprising:
a housing (2A);
a motor (M) that is accommodated in the housing (2A) and adapted to drive a tool (3);
a handle (20) that extends from a rear end of the housing (2A) and is connected to a front portion (5) of the housing (2A);
a battery pack (6) that is detachably provided to the housing (2A) and the handle (20) and that supplies electric power to the motor (M);
**characterized in that** the rechargeable electric power tool (1A) further comprises
a standby switch (15) that is arranged at the front portion (5) and that is able to set the rechargeable electric power tool (1A) to a standby state where the rechargeable electric power tool (1A) waits for the motor (M) to be driven; and
a lock-on switch (16A, 21) that is arranged at the handle (20) and that is able to shift the rechargeable electric power tool (1A) from the standby state to a state where the motor (M) is driven so as to keep the state where the motor (M) is driven.

13. The rechargeable electric power tool (1A) according to claim 12, wherein the lock-on switch includes:
a switch (16A) that is accommodated in the handle (20), that has a trigger (17) exposed from the handle (20) and depressible into the handle (20) and that is adapted to cause the motor (M) to be driven; and
a lock-on button (21) that is adapted to keep the motor (M) driven by being depressed from an outside of the handle (20) into an inside of the handle (20) and keeping a state where the trigger (17) is depressed into the handle (20).

14. The rechargeable electric power tool (1A) according to claim 12 or 13, wherein the standby switch (15) is arranged on an upper surface of the front portion (5).

## Patentansprüche

1. Wiederaufladbares elektrisches Kraftwerkzeug (1) mit
einem Gehäuse (2),
einem Motor (M), der in dem Gehäuse (2) aufgenommen ist und zum Antreiben eines Werkzeuges (3) angepasst ist, und
einem Batteriepack (6), das lösbar an dem Gehäuse (2) vorgesehen ist und das zum Zuführen elektrischer Leistung an den Motor (M) angepasst ist,
**dadurch gekennzeichnet, dass** das wiederaufladbare elektrische Kraftwerkzeug (1) weiter aufweist:
einen Standby-Schalter (15), der an dem Gehäuse (2) angeordnet ist und der das wiederaufladbare elektrische Werkzeug (1) in einen Standby-Zustand setzen kann, in welchem das wiederaufladbare elektrische Werkzeug (1) darauf wartet, dass der Motor (M) angetrieben wird,
und
einen An-Verriegelungs-Schalter (16) aufweist, der an dem Gehäuse (2) angeordnet ist und das wiederaufladbare elektrische Kraftwerkzeug (1) von dem Standby-Zustand in einen Zustand umschalten kann, in welchem der Motor (M) angetrieben wird, um den Zustand zu halten, in welchem der Motor (M) angetrieben wird.

2. Wiederaufladbares elektrisches Kraftwerkzeug (1) nach Anspruch 1, bei dem ein Griffbereich an dem Gehäuse (2) ausgebildet ist, und der Standby-Schalter (15) und der An-Verriegelungs-Schalter (16) in dem Griffbereich angeordnet sind.

3. Wiederaufladbares elektrisches Kraftwerkzeug (1) nach Anspruch 2, bei dem ein Griffbereich an sowohl der linken als auch der rechten Seitenoberfläche an einem vorderen Teil (5) des Gehäuses (2) ausgebildet ist und der Standby-Schalter (15) und der An-Verriegelungs-Schalter (16) in jedem der Griffbereiche an beiden Oberflächen angeordnet sind.

4. Wiederaufladbares elektrisches Kraftwerkzeug (1) nach Anspruch 3, das weiter einen Stab (13) aufweist, der nach unten von dem vorderen Teil (5) des Gehäuses (2) vorsteht und dazu angepasst ist, durch den Motor (M) hin und her bewegt zu werden, bei dem das Werkzeug ein Schneideblatt (3) ist, das an einen unteren Endteil des Stabes (13) gekoppelt ist und das zum Schneiden eines Werkstücks (W) verwendet wird, bei dem
der Standby-Schalter (15) und der An-Verriegelungs-Schalter (16) übereinander in einer Richtung (Y) entlang einer Erstreckungslinie des Stabes (13) in jedem von den Griffbereichen an beiden Seitenoberflächen angeordnet sind.

5. Wiederaufladbares elektrisches Kraftwerkzeug (1) nach Anspruch 4, bei dem jeder Standby-Schalter (15) in der Richtung (Y) entlang der Erstreckungslinie des Stabes (13) oben angeordnet ist und jeder An-Verriegelungs-Schalter (16) in der Richtung (Y) entlang der Erstreckungslinie unten angeordnet ist.

6. Wiederaufladbares elektrisches Kraftwerkzeug (1) nach Anspruch 4 oder 5, bei dem die Standby-Schalter (15) jeweils in den Griffbereichen an beiden Seitenoberflächen in symmetrischen Positionen in einer seitlichen Richtung des Gehäuses (2) angeordnet sind und die An-Verriegelungs-Schalter (16) jeweils in den Griffbereichen an beiden Seitenoberflächen in den symmetrischen Positionen angeordnet sind.

7. Wiederaufladbares elektrisches Kraftwerkzeug (1) nach einem der Ansprüche 1 bis 6, das weiter aufweist:
eine Informationseinheit (9), die zum Informieren, dass das wiederaufladbare elektrische Kraftwerkzeug (1) durch den Standby-Schalter (15) in den Standby-Zustand gesetzt wurde, angepasst ist.

8. Wiederaufladbares elektrisches Kraftwerkzeug (1) nach Anspruch 7, das weiter aufweist:
einen Stab (13), der nach unten von einem vorderen Teil (5) des Gehäuses (2) vorsteht und dazu angepasst ist, durch den Motor (M) hin und her bewegt zu werden, bei dem das Werkzeug ein Schneideblatt (3) ist, das an ein unteres Ende des Stabes (13) gekoppelt ist und das zum Schneiden eines Werkstücks (W) verwendet wird, und
eine Basis (4), die an eine untere Oberfläche des vorderen Teils (5) fixiert ist und die dazu angepasst ist, in Kontakt mit einer oberen Oberfläche des Werkstückes (W) gebracht zu werden, bei dem
die Informationseinheit eine Licht emittierende Diode (9) ist, die im Inneren des vorderen Teils (5) des Gehäuses (2) gehalten ist und von welcher ein Licht emittierender Teil durch eine Öffnung an der unteren Oberfläche in Richtung des Werkstückes (W) gerichtet ist, das in Kontakt mit der Basis (4) gebracht wird.

9. Wiederaufladbares elektrisches Kraftwerkzeug (1) nach Anspruch 8, bei dem der Licht emittierende Teil durch die Öffnung in Richtung einer Schneideposition des Werkstückes (W) unter Verwendung des Schneideblattes (3) gerichtet ist.

10. Wiederaufladbares elektrisches Kraftwerkzeug (1) nach einem der Ansprüche 1 bis 9, das weiter eine Steuerungseinheit (7) aufweist, die dazu angepasst ist das wiederaufladbare elektrische Kraftwerkzeug (1) so zu steuern, dass der Standby-Zustand des wiederaufladbaren elektrischen Kraftwerkzeuges (1) beendet wird, nachdem eine vorbestimmte Zeitperiode von dem Zeitpunkt verstrichen ist, zu welchem das wiederaufladbare elektrische Kraftwerkzeug (1) durch den Standby-Schalter (15) in den Standby-Zustand gesetzt wurde.

11. Wiederaufladbares elektrisches Kraftwerkzeug (1) nach Anspruch 10, das weiter einen Zeitgeber aufweist, der mit der Steuerungseinheit (7) verbunden ist und der dazu angepasst ist, die vorbestimmte Zeitperiode festzusetzen, bei dem
die Steuerungseinheit (7) den Standby-Zustand des wiederaufladbaren elektrischen Kraftwerkzeuges (1) beendet, wenn die Steuerungseinheit (7) erfasst hat, dass die vorgeschriebene Zeitperiode, die durch den Zeitgeber festgesetzt wurde, verstrichen ist.

12. Wiederaufladbares elektrisches Kraftwerkzeug (1A) mit einem Gehäuse (2A),
einem Motor (M), der in dem Gehäuse (2A) aufgenommen ist und zum Antreiben eines Werkzeuges (3) angepasst ist,
einem Handgriff (20), der sich von einem hinteren Ende des Gehäuses (2A) erstreckt und mit einem vorderen Teil (5) des Gehäuses (2A) verbunden ist;
einem Batteriepack (6), das lösbar an dem Gehäuse (2A) und dem Handgriff (20) vorgesehen ist und das dem Motor (M) elektrische Leistung zuführt,
**dadurch gekennzeichnet, dass** das wiederaufladbare elektrische Kraftwerkzeug (1A) weiter aufweist:
einen Standby-Schalter (15), der an dem vorderen Teil (5) angeordnet ist und der das wiederaufladbare elektrische Werkzeug (1A) in einen Standby-Zustand umschalten kann, in welchem das wiederaufladbare elektrische Werkzeug (1A) darauf wartet, dass der Motor (M) angetrieben wird, und
einen An-Verriegelungs- Schalter (16A, 21), der an dem Handgriff (20) angeordnet ist und das wiederaufladbare elektrische Werkzeug (1A) von dem Standby-Zustand in einen Zustand umschalten kann, in welchem der Motor (M) angetrieben wird, um den Zustand zu halten, in welchem der Motor (M) angetrieben wird.

13. Wiederaufladbares elektrisches Kraftwerkzeug (1A) nach Anspruch 12, bei dem der An-Verriegelungs-Schalter enthält:
einen Schalter (16A), der in dem Handgriff (20) aufgenommen ist, der einen Abzugshebel (17) aufweist, der von dem Handgriff (20) aus freiliegt und drückbar in den Handgriff (20) ist und der zum Bewirken, das der Motor (M) angetrieben wird, angepasst ist, und
einen An-Verriegelungs-Knopf (21), der dazu angepasst ist, durch gedrückt werden von einer Außenseite des Handgriffs (20) in eine Innenseite des Handgriffs (20) den Motor (M) angetrieben zu halten und der einen Zustands, in welchem der Abzugshebel (17) in den Handgriff (20) gedrückt ist, halten kann.

14. Wiederaufladbares elektrisches Kraftwerkzeug (1A) nach Anspruch 12 oder 13, bei dem der Standby-Schalter (15) an einer oberen Oberfläche des vorderen Teils (5) angeordnet ist.

## Revendications

1. Un outil électrique rechargeable (1) comprenant :
un boitier (2);
un moteur (M) qui est logé dans le boitier (2) et adapté pour actionner un outil (3); et
une batterie (6) qui est pourvue détachable sur le boitier (2) et qui est adaptée pour fournir le moteur (M) en électricité;
**caractérisé en ce que** l'outil électrique rechargeable (1) comprend en outre
un bouton de mise en veille (15) qui est agencé au niveau du boitier (2) et qui est apte à mettre l'outil électrique rechargeable (1) dans un état de veille où l'outil électrique rechargeable (1) attend que le moteur (M) soit actionné; et
un bouton de verrouillage (16) qui est agencé au niveau du boitier (2) et qui est apte à faire basculer l'outil électrique rechargeable (1) de l'état de veille à un état où le moteur (M) est actionné de manière à maintenir l'état où le moteur (M) est actionné.

2. L'outil électrique rechargeable (1) selon la revendication 1, dans lequel une zone de préhension est formée sur le boitier (2), et le bouton de mise en veille (15) et le bouton de verrouillage (16) sont agencés dans la zone de préhension.

3. L'outil électrique rechargeable (1) selon la revendication 2, dans lequel une zone de préhension est formée sur chacune des surfaces latérales de droite et de gauche au niveau d'une partie avant (5) du boitier (2), et le bouton de mise en veille (15) et le bouton de verrouillage (16) sont agencés dans chacune des zones de préhension sur les deux surfaces latérales.

4. L'outil électrique rechargeable (1) selon la revendication 3, comprenant en outre :
une tige (13) qui fait saillie vers le bas depuis la partie avant (5) du boitier (2) et qui est adaptée pour que le moteur (M) lui fasse faire un mouvement de va-et-vient, dans lequel l'outil est une lame de coupe (3) qui est couplée avec une extrémité inférieure de la tige (13) et qui est utilisée pour couper une pièce à usiner (W), dans lequel
le bouton de mise en veille (15) et le bouton de verrouillage (16) sont agencés l'un au-dessus de l'autre dans la direction (Y) le long d'une ligne d'extension de la tige (13) dans chacune des zones de préhension sur les deux surfaces latérales.

5. L'outil électrique rechargeable (1) selon la revendication 4, dans lequel chaque bouton de mise en veille (15) est agencé au-dessus dans la direction (Y) le long d'une ligne d'extension de la tige (13), et chaque bouton de verrouillage (16) est agencé en-dessous dans la direction (Y) le long de la ligne d'extension.

6. L'outil électrique rechargeable (1) selon l'une quelconque des revendications 4 ou 5, dans lequel les boutons de mise en veille (15) sont respectivement agencés dans les zones de préhension sur les deux surfaces latérales au niveau de positions symétriques dans une direction latérale du boitier (2), et les boutons de verrouillage (16) sont respectivement agencés dans les zones de préhension sur les deux surfaces latérales au niveau des positions symétriques.

7. L'outil électrique rechargeable (1) selon l'une quelconque des revendications 1 à 6, comprenant en outre :
un élément informatif (9) qui est adapté pour informer que l'outil électrique rechargeable (1) est mis dans l'état de veille par le bouton de mise en veille (15).

8. L'outil électrique rechargeable (1) selon la revendication 7, comprenant en outre :
une tige (13) qui fait saillie vers le bas à partir d'une partie avant (5) du boitier (2) et qui est adaptée pour que le moteur (M) lui fasse faire un mouvement de va-et-vient, dans lequel l'outil est une lame de coupe (3) qui est couplée avec une extrémité inférieure de la tige (13) et qui est utilisée pour couper une pièce à usiner (W); et
une base (4) qui est fixée à une surface inférieure de la partie avant (5) et qui est adaptée pour être amenée en contact avec une surface supérieure de la pièce à usiner (W), dans lequel
l'élément informatif est une diode électroluminescente (9) qui est maintenue à l'intérieur de la partie avant (5) du boitier (2) et de laquelle une partie électroluminescente est orientée à
travers une ouverture au niveau de la surface inférieure vers la pièce à usiner (W), qui est amenée en contact avec la base (4).

9. L'outil électrique rechargeable (1) selon la revendication 8, dans lequel la partie électroluminescente est orientée à travers l'ouverture vers une position de découpe de la pièce à usiner (W) avec l'utilisation de la lame de coupe (3).

10. L'outil électrique rechargeable (1) selon l'une quelconque des revendications 1 à 9, comprenant en outre :
un élément de contrôle (7) qui est adapté à l'outil électrique rechargeable (1) de sorte que l'outil électrique rechargeable (1) est libéré de l'état de veille après qu'une période de temps prédéterminée se soit écoulée à partir du moment où l'outil électrique rechargeable (1) est mis dans l'état de veille par le bouton de mise en veille (15).

11. L'outil électrique rechargeable (1) selon la revendication 10, comprenant en outre :
un minuteur qui est connecté à l'élément de contrôle (7) et qui est adapté à définir la période prédéterminée de temps, dans lequel
l'unité de contrôle (7) libère l'outil électrique rechargeable (1) depuis l'état de veille quand l'élément de contrôle (7) a détecté que la période prédéterminée de temps définie par le minuteur s'est écoulée.

12. Un outil électrique rechargeable (1A) comprenant :
un boitier (2A);
un moteur (M) qui est logé dans le boitier (2A) et adapté à actionner un outil (3) ;
une poignée (20) qui s'étend depuis une extrémité arrière du boitier (2A) et est connectée à une partie avant (5) du boitier (2A);
une batterie (6) qui est pourvue détachable au boitier (2A) et à la poignée (20) et qui fournit de l'énergie électrique au moteur (M);
**caractérisé en ce que** l'outil électrique rechargeable (1A) comprend en outre un bouton de mise en veille (15) qui est agencé au niveau de la partie avant (5) et qui est apte à mettre l'outil électrique rechargeable (1A) dans un état de veille où l'outil électrique rechargeable (1A) attend que le moteur (M) soit actionné; et
un bouton de verrouillage (16A, 21) qui est agencé au niveau de la poignée (20) et qui est apte à faire basculer l'outil électrique rechargeable (1A) de l'état de veille à un état où le moteur (M) est actionné de manière à maintenir l'état où le moteur (M) est actionné.

13. L'outil électrique rechargeable (1A) selon la revendication 12, dans lequel le bouton de verrouillage inclut :
un bouton (16A) qui est logé dans la poignée (20), qui a une gâchette (17) accessible depuis la poignée (20) et que l'on peut enfoncer dans la poignée (20) et qui est adapté pour provoquer l'actionnement du moteur (M); et
un bouton de verrouillage (21) qui est adapté pour maintenir le moteur (M) actionné du fait d'être enfoncé depuis un extérieur de la poignée (20) vers un intérieur de la poignée (20) et de maintenir un état où la gâchette (17) est enfoncée dans la poignée (20).

14. L'outil électrique rechargeable (1A) selon l'une quelconque des revendications 12 ou 13, dans lequel le bouton de mise en veille (15) est agencé sur une surface supérieure de la partie avant (5).
